# FASCICULE DE BREVET EUROPEEN

(11) **EP 2 488 373 B1**
(45) Date de publication et mention de la délivrance du brevet: **30.04.2014**
(21) Numéro de dépôt: 10759835.1
(22) Date de dépôt: 13.09.2010
(51) Int. Cl.: B60C 1/00, C08C 19/44, C08K 5/053, C08L 15/00

(54) **COMPOSITION DE CAOUTCHOUC A BASE DE GLYCEROL ET D'UN ELASTOMERE FONCTIONNALISE ET BANDE DE ROULEMENT POUR PNEUMATIQUE**
KAUTSCHUKZUSAMMENSETZUNG MIT GLYZERIN UND FUNKTIONALISIERTEM ELASTOMER SOWIE HIERAUS HERGESTELLTE REIFENLAUFFLÄCHE
RUBBER COMPOSITION CONTAINING GLYCEROL AND FUNCTIONALIZED ELASTOMER AND TREAD THEREOF

(30) Priorité: 12.10.2009 FR 0957115
(43) Date de publication de la demande: 22.08.2012
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: BLANCHARD, Christiane, F-63119 Chateaugay (FR); VASSEUR, Didier, F-63100 Clermont-Ferrand (FR)
(74) Mandataire: Le Cam, Véronique Marie Christine
(86) Numéro de dépôt international: PCT/EP2010/063352
(87) Numéro de publication internationale: WO 2011/045131

(56) Documents cités:
- EP-A1- 0 692 492
- EP-A1- 0 692 493
- EP-A1- 0 761 734
- FR-A1- 2 866 892
- FR-A1- 2 873 625

## Description

La présente invention est relative aux bandes de roulement des pneumatiques et aux compositions de caoutchouc utilisées pour la fabrication de telles bandes de roulement. Elle se rapporte plus particulièrement aux bandes de roulement des pneumatiques à faible résistance au roulement, renforcées majoritairement de charges inorganiques renforçantes.

Depuis que les économies de carburant et la nécessité de protéger l'environnement sont devenues une priorité, il s'est avéré nécessaire de produire des pneumatiques ayant une résistance au roulement réduite. Ceci a été rendu possible notamment grâce à la découverte de nouvelles compositions de caoutchouc renforcées présentant une faible hystérèse, synonyme d'une plus basse résistance au roulement pour les pneumatiques les comportant.

Pour atteindre cet objectif de baisse d'hystérèse, de nombreuses solutions ont été expérimentées. En particulier, on peut citer la modification de la structure des polymères et des copolymères diéniques en fin de polymérisation au moyen d'agents de fonctionnalisation, de couplage ou d'étoilage dans le but d'obtenir une bonne interaction entre le polymère ainsi modifié et la charge, qu'il s'agisse du noir de carbone ou d'une charge inorganique renforçante.

A titre d'illustration de cet art antérieur relatif à des charges inorganiques renforçantes, on peut par exemple citer le brevet EP 0 299 074 qui décrit des polymères fonctionnalisés comportant des fonctions alkoxysilanes en bout de chaîne.

On peut également citer les brevets EP 0 692 492 et EP 0 692 493 qui décrivent des polymères couplés, étoilés et fonctionnalisés en bout de chaîne par des agents de modification comportant des fonctions alkoxysilanes époxydés.

Une autre modification de l'élastomère diénique est celle décrite dans le brevet EP 0 270 071 B1 ou dans la demande de brevet JP 2001158834 par exemple. Celle-ci consiste à fonctionnaliser en bout de chaîne des élastomères diéniques vivant par des agents de modification comportant des fonctions alkoxysilanes aminés. Ces groupements amines peuvent être tertiaires, secondaires ou primaires. Dans ce dernier cas, la demande WO 2003029299 décrit un couplage de l'élastomère diénique par un tel agent de modification.

Les Demanderesses ont décrit, dans le brevet EP 0 778 311 B1 notamment, des élastomères comportant en bout de chaîne une fonction silanol ou un groupe polysiloxane terminé par une fonction silanol. Plus récemment, les Demanderesses ont décrit dans la demande de brevet WO 08/141702 un élastomère diénique couplé monomodal possédant une fonction silanol en milieu de chaîne.

Les Demanderesses ont également décrit des élastomères fonctionnalisés en bout de chaîne, couplés ou étoilés portant d'autres fonctions susceptibles de se lier à la charge renforçante, notamment la charge inorganique, de manière à baisser l'hystérèse de la composition de caoutchouc les contenant. On peut citer par exemple les demandes de brevet EP 0 692 492 A1 et EP 0 692 493 A1 qui concerne la modification d'élastomères diéniques par des agents de type alkoxysilane époxydé. Plus récemment, la demande de brevet PCT/EP09/055061 décrit le couplage d'un élastomère diénique par un agent de type alkoxysilane portant une fonction amine tertiaire ou secondaire.

Les Demanderesses ont également décrit des élastomères blocs comportant au moins un bloc polaire en bout de chaîne polymérique ou en milieu de chaîne susceptible d'atteindre des niveaux d'hystérèse globalement comparables à ceux atteints avec les élastomères modifiés mentionnés plus haut. On peut citer par exemple les demandes de brevet EP 1 127 909 A1, WO 09/000750 et WO 09/000752

Ces élastomères modifiés ont été décrits dans l'art antérieur comme efficaces pour réduire l'hystérèse, ce qui les rend tout particulièrement indiqués pour une utilisation dans des compositions destinées à constituer des bandes de roulement de pneumatiques.

Idéalement, une bande de roulement de pneumatique doit obéir à un grand nombre d'exigences techniques, tout en offrant au pneumatique un très bon niveau de comportement routier sur véhicule automobile.

Pour améliorer le comportement routier, on le sait, une rigidité de la bande de roulement est souhaitable. Or, il s'avère que le gain en hystérèse observé avec les élastomères diéniques modifiés en vu d'une meilleure liaison avec la charge renforçante s'accompagne le plus souvent par une baisse de la rigidité à cuit.

La présente invention a pour but de réduire la résistance au roulement des pneumatiques routiers sans sensiblement dégrader les autres propriétés et notamment le comportement routier.

Ce but est atteint en ce que les Inventeurs ont découvert lors de leurs recherches qu'une composition de caoutchouc spécifique, à base d'un élastomère diénique modifié comportant un segment polaire et de glycérol, permet d'obtenir une composition de caoutchouc présentant une réduction de l'hystérèse tout en améliorant la rigidité par rapport à une composition ne comprenant pas d'élastomère modifié. Ces améliorations significatives de propriétés permettent d'atteindre un très bon niveau de compromis entre résistance au roulement et comportement routier des pneumatiques comportant une bande de roulement à base d'une telle composition.

En conséquence, un premier objet de l'invention concerne une composition de caoutchouc renforcée à base d'au moins (a) un élastomère diénique modifié portant un segment polaire choisi parmi les élastomères fonctionnalisés en bout de chaîne, couplés ou étoilés par un groupement comportant une fonction polaire comprenant au moins un atome d'oxygène et les élastomères diéniques à blocs comprenant au moins un bloc polaire, (b) du glycérol et (c) une charge renforçante comprenant une charge inorganique.

L'invention a également pour objet une bande de roulement de pneumatique formée, au moins en partie, d'une telle composition de caoutchouc.

L'invention a également pour objet ces pneumatiques eux-mêmes lorsqu'ils comportent une bande de roulement conforme à l'invention.

L'invention a aussi pour objet un procédé pour préparer une bande de roulement de pneumatique conforme à l'invention.

Par l'expression composition "à base de", il faut entendre dans la présente description une composition comportant le mélange et/ou le produit de réaction *in situ* des différents constituants utilisés, certains de ces constituants de base (par exemple l'agent de couplage, l'accepteur et le donneur de méthylène) étant susceptibles de, ou destinés à réagir entre eux, au moins en partie, lors des différentes phases de fabrication des bandes de roulement, en particulier au cours de leur vulcanisation (cuisson).

Dans la présente description, sauf indication expresse différente, tous les pourcentages (%) indiqués sont des % en poids. D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Dans la présente description, on entend par élastomère diénique fonctionnalisé un élastomère diénique qui comporte un groupement comprenant un ou plusieurs hétéroatomes, en l'occurrence dans le cas présent plus particulièrement un atome d'oxygène. Dans le cadre de la présente description, ce groupement peut aussi être appelé "fonction". Les deux termes sont utilisés indifféremment.
Ce groupement peut se situer en bout de chaîne. On dira alors que l'élastomère diénique est fonctionnalisé en bout de chaîne.
Ce groupement peut se situer dans la chaîne élastomère principale linéaire. On dira alors que l'élastomère diénique est couplé ou encore fonctionnalisé en milieu de chaîne, par opposition à la position "en bout de chaîne" et bien que le groupement ne se situe pas précisément au milieu de la chaîne élastomère.
Ce groupement peut être central auquel n chaînes élastomères (n>2) sont liées formant une structure en étoile de l'élastomère. On dira alors que l'élastomère diénique est étoilé.
Selon l'invention, cette notion d'élastomère diénique fonctionnalisé ne comprend pas la fonctionnalisation le long de la chaîne élastomérique par des groupes fonctionnels.

Ainsi, un premier objet de l'invention concerne une composition de caoutchouc renforcée à base d'au moins (a) un élastomère diénique modifié portant un segment polaire choisi parmi les élastomères fonctionnalisés en bout de chaîne, couplés ou étoilés par un seul groupement comportant une fonction polaire comprenant au moins un atome d'oxygène et les élastomères diéniques à blocs comprenant au moins un bloc polaire, (b) du glycérol et (c) une charge renforçante comprenant une charge inorganique.

La composition de caoutchouc renforcée selon l'invention peut se présenter à l'état réticulé ou à l'état non réticulé, autrement dit réticulable.

Selon l'invention, l'élastomère diénique fonctionnalisé peut être choisi parmi les élastomères fonctionnalisés en bout de chaîne, couplés ou étoilés par un seul groupement comportant une fonction polaire comprenant au moins un atome d'oxygène. Cette fonction polaire peut être choisie par exemple parmi les fonctions de type silanol, alkoxysilane, alkoxysilane portant un groupement amine, époxyde, éther, ester, hydroxyl, acide carboxylique ... Cette fonction améliore notamment l'interaction entre la charge renforçante comprenant une charge inorganique et l'élastomère. De tels élastomères fonctionnalisés sont connus en soi et décrits dans l'art antérieur.

Plus particulièrement, parmi les élastomères diéniques fonctionnalisés selon l'invention on peut citer:
- les élastomères portant une fonction silanol, la fonction silanol étant située soit en bout de chaîne, soit en milieu de chaîne. Lorsqu'elle est située en bout de chaîne, la fonction silanol peut être portée par un bloc polysiloxane. Selon l'invention, à titre de bloc polysiloxane ayant une extrémité silanol conviennent plus particulièrement ceux répondant à la formule générale suivante: 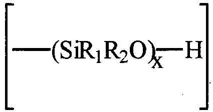 dans laquelle:
   - R₁ et R₂, identiques ou différents, représentent un groupe alkyle, cycloalkyle, aryle, alkaryle, aralkyle, vinyle ayant de 1 à 10 atomes de carbone, de préférence un groupe alkyle ayant 1 à 6 atomes de carbone.
   - x est un nombre entier allant de 1 à 1500 et préférentiellement de 1 à 50.

Des élastomères fonctionnalisés de ce type sont par exemple décrits dans les demandes de brevet EP 0 778 311 A1, EP 0 786 493 A1, WO 08/141702.
- les élastomères fonctionnalisés en bout de chaîne, couplés ou étoilés issus de la fonctionnalisation des élastomères diéniques par un agent répondant à la formule générale :

   (Y)m-R¹-Si(OR²)₃₋ₙ-R³n

   dans laquelle :
   Y représente les restes 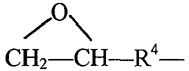 ou 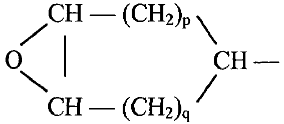
   - R¹ représente un reste alkyle, cycloalkyle ou aryle ayant de 1 à 10 atomes de carbone,
   - R² représente un reste alkyle, aryle, cycloalkyle, alkaryle, aralkyle, ayant de 1 à 12 atomes de carbone,
   - R³ représente un reste alkyle, aryle, akaryle ayant de 1 à 12 atomes de carbone,
   - R⁴ représente un reste hydrocarboné ayant de 1 à 6 atomes de carbone et pouvant comprendre un ou plusieurs atomes d'oxygène dans la chaîne hydrocarbonée,
   - n est un nombre entier choisi parmi les valeurs 0, 1,
   - m est un nombre entier choisi parmi les valeurs 1 ou 2,
   - p et q sont des nombres entiers choisis parmi les valeurs 0, 1, 2, 3 ou 4 étant entendu que la somme p + q doit représenter un nombre entier compris entre 2 et 5 inclusivement.

Des élastomères fonctionnalisés de ce type sont par exemple décrits dans les demandes de brevet EP 0 692 492 A1 et EP 0 692 493 A1.
- les élastomères fonctionnalisés en bout de chaîne ou couplés issus de la modification des élastomères diéniques par un agent de type alkoxysilane portant un groupement amine, cyclique ou non, tertiaire, secondaire ou primaire. Des élastomères fonctionnalisés de ce type sont par exemple décrits dans les demandes de brevet, US 2005/0203251, JP 2001158834, JP 2005232367, EP 1 457 501 A1, PCT/EP09/055061. Avantageusement, l'élastomère diénique ainsi fonctionnalisé est couplé par un groupement alkoxysilane lié à l'élastomère diénique par l'atome de silicium et portant un radical amine.

Selon l'invention, l'élastomère diénique fonctionnalisé peut également être choisi parmi les élastomères à blocs comprenant au moins un bloc polaire, ce dernier étant plus particulièrement un bloc polyéther. Ces élastomères à blocs comportent au moins ledit bloc polaire en bout de chaîne polymérique ou en milieu de chaîne, ou encore ces élastomères à blocs peuvent se présenter sous forme étoilée avec au moins un bloc polaire central auquel sont liées plusieurs, c'est-à-dire plus de deux, chaînes polymériques. Ces élastomères à blocs sont généralement obtenus par réaction d'un élastomère diénique vivant sur un agent de fonctionnalisation ayant un bloc polyéther fonctionnel. De tels élastomères sont décrits par exemple dans les demandes de brevet EP 1 127 909 A1, WO 09/000750 et WO 09/000752.

Selon une variante préférentielle de l'invention, l'élastomère diénique est fonctionnalisé ou couplé par un groupement portant une fonction silanol. Plus préférentiellement selon cette variante, l'élastomère diénique porte en bout de chaîne une fonction silanol ou un bloc polysiloxane ayant une extrémité silanol.

Par élastomère diénique, doit être compris de manière connue un (on entend un ou plusieurs) élastomère issu au moins en partie (i.e., un homopolymère ou un copolymère) de monomères diènes (monomères porteurs de deux doubles liaisons carbone-carbone, conjuguées ou non). Plus particulièrement, par élastomère diénique, on entend tout homopolymère obtenu par polymérisation d'un monomère diène conjugué ayant 4 à 12 atomes de carbone, ou tout copolymère obtenu par copolymérisation d'un ou plusieurs diènes conjugués entre eux ou avec un ou plusieurs composés vinylaromatiques ayant de 8 à 20 atomes de carbone. Dans le cas de copolymères, ceux-ci contiennent de 20 % à 99 % en poids d'unités diéniques, et de 1 à 80 % en poids d'unités vinylaromatiques.

A titre de diènes conjugués utilisables dans le procédé conforme à l'invention conviennent notamment le butadiène-1,3, le 2-méthyl-1,3-butadiène, les 2,3 di(alcoyle en C1 à C5)-1,3-butadiène tels que par exemple le 2,3-diméthyl-1,3-butadiène, 2,3-diéthyl-1,3-butadiène, 2-méthyl-3-éthyl-1,3-butadiène, le 2-méthyl-3-isopropyl-1,3-butadiène, le phényl-1,3-butadiène, le 1,3-pentadiène, le 2,4 hexadiène, etc.

A titre de composés vinylaromatiques conviennent notamment le styrène, l'ortho-, méta, para-méthylstyrène, le mélange commercial "vinyltoluène", le para-tertiobutylstyrène, les méthoxystyrènes, le vinylmésitylène, le divinylbenzène, le vinylnaphtalène, etc.

L'élastomère diénique de la composition conforme à l'invention est choisi préférentiellement dans le groupe des élastomères diéniques fortement insaturés constitué par les polybutadiènes (BR), les polyisoprènes (IR) de synthèse, les copolymères de butadiène, les copolymères d'isoprène et les mélanges de ces élastomères.

Selon un mode de réalisation particulier, l'élastomère diénique est un SBR, qu'il s'agisse d'un SBR préparé en émulsion ("ESBR") ou d'un SBR préparé en solution ("SSBR"). On utilise notamment un SBR ayant une teneur en styrène moyenne, par exemple comprise entre 20% et 35% en poids, ou une teneur en styrène élevée, par exemple de 35 à 45%, une teneur en liaisons vinyliques de la partie butadiénique comprise entre 15% et 70%, une teneur (% molaire) en liaisons trans-1,4 comprise entre 15% et 75% et une Tg comprise entre - 10°C et-55°C ; un tel SBR peut être avantageusement utilisé en mélange avec un BR possédant de préférence plus de 90% (% molaire) de liaisons cis-1,4.

Selon un autre mode de réalisation particulier, l'élastomère diénique est un élastomère isoprénique. Par "élastomère isoprénique", on entend de manière connue un homopolymère ou un copolymère d'isoprène, en d'autres termes un élastomère diénique choisi dans le groupe constitué par les polyisoprènes de synthèse (IR), les différents copolymères d'isoprène et les mélanges de ces élastomères. Parmi les copolymères d'isoprène, on citera en particulier les d'isoprène-styrène (SIR), d'isoprène-butadiène (BIR) ou d'isoprène-butadiène-styrène (SBIR).

Cet élastomère isoprénique est de préférence un polyisoprène cis-1,4 de synthèse et de préférence des polyisoprènes ayant un taux (% molaire) de liaisons cis-1,4 supérieur à 90%, plus préférentiellement encore supérieur à 98%.

Conviennent notamment les polybutadiènes ayant une teneur (% molaire) en unités -1,2 comprise entre 4% et 80% ou ceux ayant une teneur (% molaire) en cis-1,4 supérieure à 80%, les polyisoprènes, les copolymères de butadiène-styrène et en particulier ceux ayant une Tg (température de transition vitreuse, mesurée selon ASTM D3418) entre 0°C et -80°C et plus particulièrement entre -10°C et -70°C, une teneur en styrène comprise entre 5% et 60% en poids et plus particulièrement entre 20% et 50%, une teneur (% molaire) en liaisons -1,2 de la partie butadiénique comprise entre 4% et 75%, une teneur (% molaire) en liaisons trans-1,4 comprise entre 10% et 80%, les copolymères de butadiène-isoprène et notamment ceux ayant une teneur en isoprène comprise entre 5% et 90% en poids et une Tg de - 40°C à - 80°C, les copolymères isoprène-styrène et notamment ceux ayant une teneur en styrène comprise entre 5% et 50% en poids et une Tg comprise entre - 5°C et - 50°C. Dans le cas des copolymères de butadiène-styrène-isoprène conviennent notamment ceux ayant une teneur en styrène comprise entre 5% et 50% en poids et une teneur en isoprène comprise entre 15% et 60% en poids, et plus généralement tout copolymère butadiène-styrène-isoprène ayant une Tg comprise entre - 20°C et - 70°C.

La polymérisation de monomères diéniques est amorcée par un initiateur. En tant qu'initiateur de polymérisation, on peut utiliser tout initiateur anionique ou non mono-ou polyfonctionnel connu. Toutefois un initiateur contenant un métal alcalin tel que le lithium ou alcalino-terreux tel que le baryum est utilisé à titre préférentiel. Comme initiateurs organolithiens conviennent notamment ceux comportant une ou plusieurs liaisons carbone-lithium. Des composés représentatifs sont les organolithiens aliphatiques tels que l'éthyllithium, le n-butyllithium (n-BuLi), l'isobutyllithium, les polyméthylènes dilithium tels que le 1,4-dilithiobutane, etc...

Les amidures de lithium sont également des initiateurs préférés car ils conduisent à des polymères ayant un groupement aminé à l'extrémité ou les extrémités de chaîne non liées à une fonction telle que décrite plus haut ou non liées à un bloc polaire. L'amidure de lithium est obtenu à partir d'une amine secondaire acyclique ou cyclique, dans ce dernier cas la pyrrolidine et l'hexaméthylèneimine sont hautement préférées ; ledit amidure pouvant être rendu soluble dans un solvant hydrocarboné grâce à l'utilisation conjointe d'un agent de solvatation, un éther par exemple, comme décrit dans le brevet FR 2 250 774.

Des composés représentatifs contenant du baryum sont ceux décrits par exemple dans les demandes de brevet FR-A- 2 302 311 et FR-A- 2 273 822 et les certificats d'addition FR-A-2 338 953 et FR-A-2 340 958.

Avantageusement selon l'invention, la polymérisation de monomères diéniques est amorcée par un initiateur de type amidure de lithium afin d'introduire une fonctionnalisation aminée supplémentaire de l'élastomère en bout de chaîne.

La polymérisation est, comme connu en soi, de préférence effectuée en présence d'un solvant inerte qui peut être par exemple un hydrocarbure aliphatique ou alicyclique comme le pentane, l'hexane, l'heptane, l'iso-octane, le cyclohexane ou un hydrocarbure aromatique comme le benzène, le toluène, le xylène.

La polymérisation peut être effectuée en continu ou en discontinu. On effectue généralement la polymérisation à une température comprise entre 20°C et 120°C et de préférence voisine de 30°C à 90°C. On peut bien entendu également ajouter en fin de polymérisation un agent de transmétallation pour modifier la réactivité de l'extrémité de chaîne vivante.

Les élastomères diéniques fonctionnalisés en bout de chaîne, couplés ou étoilés par un groupement comprenant une fonction polaire comportant au moins un atome d'oxygène, mis en oeuvre dans l'invention, peuvent être obtenus par divers procédés connus en soi, notamment décrits dans l'art antérieur cité plus haut, par exemple par réaction de l'élastomère diénique vivant issu de la polymérisation avec un agent de fonctionnalisation, de couplage ou d'étoilage en fonction de la fonctionnalisation de l'élastomère diénique souhaitée.

Les élastomères à blocs comprenant au moins un bloc polaire, peuvent être obtenus par divers procédés décrits dans l'art antérieur, notamment ceux décrit dans les demandes de brevet US 2005/0203251, JP 2001158834, JP 2005232367, EP 1 457 501 A1, PCT/EP09/055061

Il doit être entendu que la composition de l'invention peut comprendre un ou plusieurs de ces élastomères diéniques modifiés portant un segment polaire. Ainsi, par élastomères diéniques modifiés portant un segment polaire on incluse également des mélanges de ces élastomères.

L'élastomère diénique modifiés portant un segment polaire, selon l'invention, peut être utilisé seul dans la composition ou en coupage avec tout élastomère diénique conventionnel, tel que choisi par exemple parmi le caoutchouc naturel, les polybutadiènes (BR), les polyisoprènes (IR) de synthèse, les copolymères de butadiène, les copolymères d'isoprène et les mélanges de ces élastomères, qu'il soit fonctionnalisé en bout de chaîne, couplé ou étoilé, ou non, de macrostructure et/ou de microstructure identique ou différente de élastomère diénique modifiés.

On notera que l'amélioration des propriétés hystérétiques de la composition selon l'invention sera d'autant plus élevée que la proportion dans cette composition du ou des élastomères modifiés conformément à l'invention sera importante. C'est pourquoi, selon une variante préférentielle de l'invention, la composition de caoutchouc renforcée est à base d'une matrice élastomère comprenant à titre majoritaire l'élastomère diénique modifié portant un segment polaire conformément à l'invention. Par majoritaire, on entend la fraction pondérale la plus élevée de la matrice, particulièrement une fraction pondérale d'au moins 50% par rapport au poids de la matrice. Préférentiellement, la matrice élastomère comprend cet élastomère diénique modifiés portant un segment ou groupement polaire conformément à l'invention, selon une quantité supérieure ou égale à 60 pce (parties en poids pour cent parties d'élastomère total), plus préférentiellement supérieure ou égale à 80 pce, voire comme seul élastomère diénique avec une teneur égale à 100 pce, teneur maximale en élastomère.

Selon l'invention, un autre composant constitutif de la composition de caoutchouc est le glycérol.

Il est connu d'abaisser la viscosité de compositions de caoutchouc à base d'élastomères conventionnels non modifiés en y incorporant certains polyols, dont le glycérol, comme le décrit le brevet EP 0 761 734 B1.

Il est également connu d'utiliser des composés polaires de type polyols, afin d'améliorer l'adhérence sur sol mouillé de pneumatiques incorporant des compositions de caoutchouc à base d'élastomères diéniques comprenant le long de la chaîne polymérique plusieurs groupements polaires, tels qu'essentiellement des groupements nitrile. Le brevet EP 1 253 167 B1 illustre cet état de la technique.

Néanmoins aucun de ces documents de l'art antérieur ne fait état de compositions de caoutchouc comprenant l'association spécifique de glycérol et d'un élastomère diénique modifié portant un segment polaire conformément à la présente invention, ni de l'amélioration des propriétés hystérétique d'une telle composition, tout en améliorant sa rigidité à cuit ou tout au moins en la maintenant à un niveau satisfaisant.

Avantageusement, le glycérol est présent dans la composition de caoutchouc renforcée dans des quantités allant de 1 à 10 pce, préférentiellement allant de 1 à 5 pce.

Un autre composant constitutif de la composition de caoutchouc selon l'invention est la charge renforçante qui comprend une charge inorganique.

Les élastomères diéniques modifiés portant un segment polaire selon la présente invention possèdent une aptitude particulière à être utilisés pour constituer des compositions de caoutchouc comprenant à titre majoritaire une charge inorganique renforçante, comme la silice. Par majoritaire, on entend la fraction pondérale la plus élevée par rapport à la charge renforçante totale et de préférence une fraction pondérale d'au moins 50% par rapport au poids de cette charge renforçante, voire au moins 70%.

Par "charge inorganique renforçante", doit être entendu dans la présente demande, par définition, toute charge inorganique ou minérale quelles que soient sa couleur et son origine (naturelle ou de synthèse), encore appelée charge "blanche", charge "claire" voire "charge non noire" ("non-black filler") par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

L'état physique sous lequel se présente la charge inorganique renforçante est indifférent, que ce soit sous forme de poudre, de microperles, de granulés, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-après.

Comme charges inorganiques renforçantes conviennent notamment des charges minérales du type siliceux, en particulier de la silice (SiO2), ou du type alumineuse, en particulier de l'alumine (Al2O3). La silice utilisée peut être toute silice renforçante connue de l'homme du métier, notamment toute silice précipitée ou pyrogénée présentant une surface BET ainsi qu'une surface spécifique CTAB toutes deux inférieures à 450 m2/g, de préférence de 30 à 400 m2/g. A titres de silices précipitées hautement dispersibles (dites "HDS"), on citera par exemple les silices "Ultrasil 7000" et "Ultrasil 7005" de la société Degussa, les silices "Zeosil 1165MP", "1135MP" et "1115MP" de la société Rhodia, la silice "Hi-Sil EZ150G" de la société PPG, les silices "Zeopol 8715", "8745" et "8755" de la Société Huber, les silices à haute surface spécifique telles que décrites dans la demande WO 03/16837.

La charge inorganique renforçante utilisée, en particulier s'il s'agit de silice, a de préférence une surface BET comprise entre 45 et 400 m2/g, plus préférentiellement comprise entre 60 et 300 m2/g.

Outre la charge inorganique, la charge renforçante peut également contenir une charge organique, tel que du noir de carbone par exemple, selon une fraction pondérale minoritaire soit une fraction strictement inférieur à 50% en poids du poids total de la charge renforçante, voire inférieure à 30%.

Comme noirs de carbone conviennent tous les noirs de carbone, notamment les noirs du type HAF, ISAF, SAF conventionnellement utilisés dans les bandes de roulement des pneumatiques (noirs dits de grade pneumatique). Parmi ces derniers, on citera plus particulièrement les noirs de carbone renforçants des séries 100, 200 ou 300 (grades ASTM), comme par exemple les noirs N115, N134, N234, N326, N330, N339, N347, N375. Les noirs de carbone pourraient être par exemple déjà incorporés à l'élastomère diénique modifié portant un segment polaire conformément à la présente invention sous la forme d'un masterbatch (voir par exemple demandes WO 97/36724 ou WO 99/16600).

Comme exemples de charges organiques autres que des noirs de carbone, on peut citer les charges organiques de polyvinylaromatique fonctionnalisé telles que décrites dans les demandes WO-A-2006/069792 et WO-A-2006/069793, ou encore les charges organiques de polyvinyl non aromatique fonctionnalisé telles que décrites dans les demandes WO-A-2008/003434 et WO-A-2008/003435.

De manière préférentielle, le taux de charge renforçante totale est compris entre 50 et 200 pce, plus préférentiellement entre 60 et 140 pce, et encore plus préférentiellement entre 70 et 130 pce, l'optimum étant de manière connue différent selon les applications particulières visées : le niveau de renforcement attendu sur un pneumatique vélo, par exemple, est bien sûr inférieur à celui exigé sur un pneumatique apte à rouler à grande vitesse de manière soutenue, par exemple un pneumatique moto, un pneumatique pour véhicule de tourisme ou pour véhicule utilitaire tel que Poids lourd.

Selon une variante de réalisation de l'invention, on utilise une charge renforçante comportant de 50 à 150 pce, plus préférentiellement entre 70 et 110 pce de charge inorganique, particulièrement de silice, et optionnellement du noir de carbone ; le noir de carbone, lorsqu'il est présent, est utilisé dans cette variante de préférence à un taux compris entre 0 et 30 pce, plus préférentiellement compris entre 0 et 20 pce (par exemple de 0,1 à 10 pce).

Pour coupler la charge inorganique renforçante à l'élastomère diénique, on utilise de manière connue un agent de couplage (ou agent de liaison) au moins bifonctionnel destiné à assurer une connexion suffisante, de nature chimique et/ou physique, entre la charge inorganique et l'élastomère diénique, en particulier des organosilanes ou des polyorganosiloxanes bifonctionnels.

On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

Conviennent en particulier, sans que la défmition ci-après soit limitative, des silanes polysulfurés dits "symétriques" répondant à la formule générale (I) suivante:
(I) Z - A' - Sx - A' - Z , dans laquelle:
   - x est un entier de 2 à 8 (de préférence de 2 à 5) ;
   - A' est un radical hydrocarboné divalent (de préférence des groupements alkylène en C₁-C₁₈ ou des groupements arylène en C₆₋C₁₂, plus particulièrement des alkylènes en C₁-C₁₀, notamment en C₁-C₄, en particulier le propylène) ;
   - Z répond à l'une des formules ci-après: 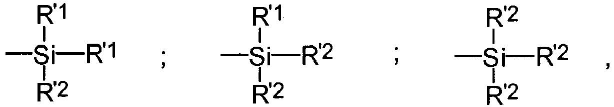
   dans lesquelles:
   - les radicaux R'1, substitués ou non substitués, identiques ou différents entre eux, représentent un groupe alkyle en C1-C18, cycloalkyle en C5-C18 ou aryle en C6-C18 (de préférence des groupes alkyle en C1-C6, cyclohexyle ou phényle, notamment des groupes alkyle en C1-C4, plus particulièrement le méthyle et/ou l'éthyle).
   - les radicaux R'2, substitués ou non substitués, identiques ou différents entre eux, représentent un groupe alkoxyle en C1-C18 ou cycloalkoxyle en C5-C18 (de préférence un groupe choisi parmi alkoxyles en C1-C8 et cycloalkoxyles en C5-C8, plus préférentiellement encore un groupe choisi parmi alkoxyles en C1-C4, en particulier méthoxyle et éthoxyle).

A titre d'exemples de silanes polysulfurés, on citera plus particulièrement les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, ou le disulfure de bis-(triéthoxysilylpropyle), en abrégé TESPD. On citera également à titre d'exemples préférentiels les polysulfures (notamment disulfures, trisulfures ou tétrasulfures) de bis-(monoalkoxyl(C1-C4)-dialkyl(C1-C4)silylpropyl), plus particulièrement le tétrasulfure de bis-monoéthoxydiméthylsilylpropyl tel que décrit dans la demande de brevet WO 02/083782 (ou US 2004/132880).

A titre d'agent de couplage autre qu'alkoxysilane polysulfuré, on citera notamment des POSS (polyorganosiloxanes) bifonctionnels ou encore des polysulfures d'hydroxysilane tels que décrits dans les demandes de brevet WO 02/30939 (ou US 6,774,255) et WO 02/31041 (ou US 2004/051210), ou encore des silanes ou POSS porteurs de groupements fonctionnels azodicarbonyle, tels que décrits par exemple dans les demandes de brevet WO 2006/125532, WO 2006/125533, WO 2006/125534.

Dans les compositions conformes à l'invention, le taux d'agent de couplage est avantageusement inférieur à 20 pce, étant entendu qu'il est en général souhaitable d'en utiliser le moins possible. Son taux est préférentiellement compris entre 0,5 et 12 pce, plus préférentiellement de 3 à 10 pce, en particulier de 4 à 7 pce.

L'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère.

Les compositions de caoutchouc conformes à l'invention peuvent également contenir, en complément des agents de couplage, des activateurs de couplage, des agents de recouvrement des charges inorganiques ou plus généralement des agents d'aide à la mise en oeuvre susceptibles de manière connue, grâce à une amélioration de la dispersion de la charge dans la matrice de caoutchouc et à un abaissement de la viscosité des compositions, d'améliorer leur faculté de mise en oeuvre à l'état cru, ces agents étant par exemple des silanes hydrolysables tels que des alkylalkoxysilanes, des polyols, des polyéthers, des amines primaires, secondaires ou tertiaires, des polyorganosiloxanes hydroxylés ou hydrolysables.

Les compositions de caoutchouc conformes à l'invention peuvent comporter également tout ou partie des additifs usuels habituellement utilisés dans les compositions d'élastomères destinées à la fabrication de pneumatiques, comme par exemple des pigments, des charges non renforçantes, des agents de protection tels que cires anti-ozone, anti-ozonants chimiques, antioxydants, des agents anti-fatigue, des agents plastifiants, des résines renforçantes ou plastifiantes, des accepteurs (par exemple résine phénolique novolaque) ou des donneurs de méthylène (par exemple HMT ou H3M) tels que décrits par exemple dans la demande WO 02/10269, un système de réticulation à base soit de soufre, soit de donneurs de soufre et/ou de peroxyde et/ou de bismaléimides, des accélérateurs de vulcanisation, des activateurs de vulcanisation.

Les compositions de l'invention peuvent également comporter, à titre d'agent plastifiant préférentiel non aromatique ou très faiblement aromatique, au moins une résine hydrocarbonée solide à température ambiante (23°C), un plastifiant liquide, ou un mélange des deux.

Le taux global d'un tel agent plastifiant préférentiel est de préférence compris entre 5 et 50 pce, plus préférentiellement compris entre 10 et 40 pce, notamment dans un domaine de 15 à 35 pce.

Lorsque l'agent plastifiant est une résine hydrocarbonée dont la Tg est supérieure à 0°C, elle présente de préférence au moins une quelconque des caractéristiques suivantes, plus préférentiellement les trois :
- une Tg supérieure à 20°C, plus préférentiellement supérieure à 30°C ;
- une masse moléculaire moyenne en nombre (Mn) comprise entre 400 et 2000 g/mol, plus préférentiellement entre 500 et 1500 g/mol ;
- un indice de polymolécularité (Ip) inférieur à 3, plus préférentiellement inférieur à 2 (rappel : Ip = Mw/Mn avec Mw masse moléculaire moyenne en poids).

Les résines hydrocarbonées peuvent être aliphatiques, ou aromatiques ou encore du type aliphatique/ aromatique c'est-à-dire à base de monomères aliphatiques et/ou aromatiques. Elles peuvent être naturelles ou synthétiques, à base ou non de pétrole (si tel est le cas, connues aussi sous le nom de résines de pétrole).

A titre de monomères aromatiques conviennent par exemple le styrène, l'alpha- méthylstyrène, l'ortho-, méta-, para-méthylstyrène, le vinyle-toluène, le para-tertiobutylstyrène, les méthoxystyrènes, les chlorostyrènes, le vinylmésitylène, le divinylbenzène, le vinylnaphtalène, tout monomère vinylaromatique issu d'une coupe C₉ (ou plus généralement d'une coupe C₈ à C₁₀). De préférence, le monomère vinylaromatique est du styrène ou un monomère vinylaromatique issu d'une coupe C₉ (ou plus généralement d'une coupe C₈ à C₁₀). De préférence, le monomère vinylaromatique est le monomère minoritaire, exprimé en fraction molaire, dans le copolymère considéré.

A titre d'exemple, la résine plastifiante hydrocarbonée est choisie dans le groupe constitué par les résines d'homopolymère ou copolymère de cyclopentadiène (en abrégé CPD) ou dicyclopentadiène (en abrégé DCPD), les résines d'homopolymère ou copolymère terpène, les résines d'homopolymère ou copolymère terpène phénol, les résines d'homopolymère ou copolymère de coupe C₅, les résines d'homopolymère ou copolymère de coupe C₉ et les mélanges de ces résines. Parmi les résines plastifiantes hydrocarbonées de type terpénique, on citera notamment les résines d'homo- ou copolymères d'alphapinène, betapinène, dipentène ou polylimonène.

Ces résines peuvent être utilisées en mélanges, seules ou en combinaison avec un plastifiant liquide par exemple une huile, telle que MES ou TDAE.

Les résines ci-dessus sont bien connues de l'homme du métier et disponibles commercialement. Lorsque l'agent plastifiant est un plastifiant liquide à 20 °C, dit à « basse Tg », c'est-à-dire qui par définition présente une Tg inférieure à -20 °C, de préférence inférieure à -40 °C, est utilisable toute huile d'extension, qu'elle soit de nature aromatique ou non-aromatique, tout agent plastifiant liquide connu pour ses propriétés plastifiantes vis-à-vis d'élastomères diéniques. Conviennent particulièrement les plastifiants liquides choisis dans le groupe constitué par les huiles naphténiques, notamment hydrogénées, les huiles paraffiniques, les huiles MES, les huiles TDAE, les plastifiants esters, éthers, les plastifiants phosphates et sulfonates, les huiles végétales, notamment les plastifiants esters tels que par exemple les trioléates de glycérol et plus particulièrement l'huile de tournesol oléique, et les mélanges de ces composés.

L'invention a également pour objet un procédé de préparation d'une composition de caoutchouc renforcée conforme à l'invention. Ce procédé comprend :
(i) la réalisation, à une température maximale comprise entre 130 °C et 200 °C, d'un premier temps de travail thermomécanique (parfois qualifié de phase " non productive ") des constituants de base nécessaires, à l'exception du système de réticulation, de ladite composition comprenant l'élastomère diénique modifié portant un segment polaire conformément à l'invention, le glycérol et une charge renforçante, à l'exception d'un système de réticulation, puis
(ii) la réalisation, à une température inférieure à ladite température maximale dudit premier temps, de préférence inférieure à 120 °C, d'un second temps de travail mécanique au cours duquel est incorporé ledit système de réticulation.

La composition de caoutchouc ainsi obtenue peut ensuite être extrudée ou calandrée de manière connue en soi, sous la forme désirée, pour fabriquer des semi-finis tels que des bandes de roulement.

Ce procédé peut également comprendre, préalablement à la réalisation des étapes (i) et (ii) précitées, les étapes de la préparation de l'élastomère diénique modifié portant un segment polaire conformément à l'invention décrit plus haut.

L'invention a également pour objet un pneumatique qui incorpore dans au moins un de ses éléments constitutifs une composition de caoutchouc renforcée selon l'invention, et plus particulièrement des articles semi-finis d'un pneumatique qui comprennent cette composition.

En raison de l'hystérèse réduite et de la rigidité accrue qui caractérise une composition de caoutchouc renforcée selon l'invention à l'état vulcanisé, on notera qu'un pneumatique dont la bande de roulement comprend cette composition présente une résistance au roulement avantageusement réduite tout en offrant au pneumatique un très bon niveau de comportement routier sur véhicule automobile. L'invention a donc également pour objet une bande de roulement de pneumatique qui est telle qu'elle comprend une composition de caoutchouc renforcée selon l'invention, réticulable ou réticulée, ou bien qui est telle qu'elle est constituée de cette composition, ainsi que sont procédé de fabrication qui outre les étapes (i) et (ii) décrites plus haut comprend également une étape (iii) consistant à extruder ou calandrer la composition de caoutchouc ainsi obtenue, sous la forme d'une bande de roulement de pneumatique.

Les caractéristiques précitées de la présente invention, ainsi que d'autres, seront mieux comprises à la lecture de la description suivante de plusieurs exemples de réalisation de l'invention, donnés à titre illustratif et non limitatif.

### I. MESURES ET TESTS UTILISES

Les bandes de roulement et compositions de caoutchouc constitutives de ces bandes de roulement sont caractérisées, avant et après cuisson, comme indiqué ci-après.

### I-1. Plasticité Mooney

On utilise un consistomètre oscillant tel que décrit dans la norme française NF T 43-005 (Novembre 1980). La mesure de plasticité Mooney se fait selon le principe suivant : la composition à l'état cru (i.e., avant cuisson) est moulée dans une enceinte cylindrique chauffée à 100°C. Après une minute de préchauffage, le rotor tourne au sein de l'éprouvette à 2 tours/minute et on mesure le couple utile pour entretenir ce mouvement après 4 minutes de rotation. La plasticité Mooney (ML 1+4) est exprimée en "unité Mooney" (UM, avec 1 UM = 0,83 Newton.mètre).

### I-2. Dureté Shore A

La dureté Shore A des compositions après cuisson est appréciée conformément à la norme ASTM D 2240-86.

### I-3. Essais de traction

Ces essais permettent de déterminer les contraintes d'élasticité et les propriétés à la rupture. Sauf indication différente, ils sont effectués conformément à la norme française NF T 46-002 de septembre 1988. On mesure en seconde élongation (i.e. après un cycle d'accommodation) les modules sécants dits "nominaux" (ou contraintes apparentes, en MPa) à 100% d'allongement ("MA100"). Toutes ces mesures de traction sont effectuées dans les conditions normales de température (23±2°C) et d'hygrométrie (50+5% d'humidité relative), selon la norme française NF T 40-101 (décembre 1979). On mesure également les contraintes à la rupture (en MPa) et les allongements à la rupture (en %), à une température de 23°C.

### I-4. Propriétés dynamiques

Les propriétés dynamiques G* et tan(δ)ₘₐₓ sont mesurées sur un viscoanalyseur (Metravib VA4000), selon la norme ASTM D5992-96. On enregistre la réponse d'un échantillon de composition vulcanisée (éprouvette cylindrique de 4 mm d'épaisseur et de 400 mm² de section), soumis à une sollicitation sinusoïdale en cisaillement simple alterné, à la fréquence de 10Hz, dans les conditions normales de température (40°C) selon la norme ASTM D1349 - 99. On effectue un balayage en amplitude de déformation de 0,1 % à 50% (cycle aller), puis de 50% à 1% (cycle retour). Les résultats exploités sont le module complexe de cisaillement dynamique (G*) et le facteur de perte tan(δ). Pour le cycle retour, on indique la valeur maximale de tan(δ) observée (tan(δ)ₘₐₓ) entre les valeurs à 0,15% et à 50% de déformation (effet Payne).

### II - PREPARATION DES ELASTOMERES

Deux élastomères sont testés dans cet exemple. Il s'agit de deux SBR présentant un pourcentage de styrène de 25%, un pourcentage de vinyl 1,2 de 58%. Ils sont tous deux fonctionnalisés.

### 1) Préparation d'un copolymère A fonctionnalisé SiOH en bout de chaîne :

On introduit en continu dans un réacteur de 32,5 l équipé d'un agitateur de type turbine du cyclohexane, du butadiène, du styrène et du tetrahydrofurfuryl éthyle éther, selon des débits massiques respectifs de 100 /11/3,2/0,037. On introduit en entrée de ligne suffisamment de n-butyllithium (n-BuLi) pour 100 g de monomères afin de neutraliser les impuretés protiques apportées par les différents constituants présents dans l'entrée de ligne. A l'entrée du réacteur, on introduit 530 µmol de n-BuLi pour 100 g de monomères.

On ajuste les différents débits de telle sorte que le temps de séjour moyen dans le réacteur soit de 40 min. La température est maintenue à 70 °C.

Le taux de conversion, qui est mesuré sur un prélèvement réalisé en sortie de réacteur, est de 98 %.

Enfin, en sortie de réacteur, on ajoute à la solution de polymère vivant (sur mélangeur statique en ligne) 265 micromoles pour 100 g de monomères d'hexaméthylcyclotrisiloxane en solution dans le cyclohexane. Puis on soumet le copolymère à un traitement anti-oxydant, à l'aide de 0,8 pce de 2,2'-méthylène-bis(4-méthyl-6-tertiobutylphénol) et de 0.2 pce de N-(1,3-diméthylbutyl)-N'-phényl-p-phénylènediamine.

On sépare le copolymère ainsi traité de sa solution par une opération de stripping à la vapeur d'eau, puis on le sèche sur un outil à cylindres à 100 °C pendant 20 min, pour obtenir le copolymère fonctionnalisé SiOH en extrémité de chaîne.

La viscosité ML de ce copolymère A est de 53. La masse moléculaire du copolymère, déterminée par SEC conventionnelle, est de 123 000 g/mol.

La microstructure de ce copolymère A est déterminée par RMN 13C.

Le bloc SBR de ce copolymère A contient 25 % de styrène (en masse) et, pour sa partie butadiénique, 58 % de motifs vinyliques, 21 % de motifs 1,4 cis et 21 % de motifs 1,4 trans.

L'analyse RMN 2D 1H-29Si permet de conclure à l'existence d'une fonction bout de chaîne SBR(CH3)2SiOH. Le taux de fonctions (CH3)2Si déterminé par RMN 1H pour le copolymère A est de 5,85 mmol/kg.

### 2) Préparation d'un copolymère B fonctionnalisé par le 3-(Glycidyloxypropyl)triméthoxysilane en milieu de chaine :

On introduit en continu dans un réacteur de 32,5 l équipé d'un agitateur de type turbine du cyclohexane, du butadiène, du styrène et du tetrahydrofurfuryl éthyle éther, selon des débits massiques respectifs de 100/11/3,2/0,037. On introduit en entrée de ligne suffisamment de n-butyllithium (n-BuLi) pour 100 g de monomères afin de neutraliser les impuretés protiques apportées par les différents constituants présents dans l'entrée de ligne. A l'entrée du réacteur, on introduit 950 µmol de n-BuLi pour 100 g de monomères.

On ajuste les différents débits de telle sorte que le temps de séjour moyen dans le réacteur soit de 40 min. La température est maintenue à 70 °C.

Le taux de conversion, qui est mesuré sur un prélèvement réalisé en sortie de réacteur, est de 95 %.

La viscosité inhérente, qui est mesurée à 25°C à 0,1 g/dl dans le toluène, sur un prélèvement réalisé en sortie réacteur, stoppé avec un excès de méthanol par rapport au lithium, est de 1,35 dl/g.

Enfin, en sortie de réacteur, on ajoute à la solution de polymère vivant (sur mélangeur statique en ligne) 475micromoles pour 100 g de monomères de 3-(Glycidyloxypropyl)triméthoxysilane en solution dans le cyclohexane. Puis on soumet le copolymère à un traitement anti-oxydant, à l'aide de 0,8 pce de 2,2'-méthylène-bis(4-méthyl-6-tertiobutylphénol) et de 0.2 pce de N-(1,3-diméthylbutyl)-N'-phényl-p-phénylènediamine.

On sépare le copolymère ainsi traité de sa solution par une opération de stripping à la vapeur d'eau, puis on le sèche sur un outil à cylindres à 100 °C pendant 20 min, pour obtenir le copolymère B.

La viscosité ML de ce copolymère B est de 55. La masse moléculaire du copolymère, déterminée par SEC conventionnelle, est de 136 000 g/mol.

Le saut de viscosité inhérente (rapport de la viscosité après injection de 3-(Glycidyloxypropyl)triméthoxysilane sur la viscosité avant injection de 3-(Glycidyloxypropyl)triméthoxysilane) est de 1,33.

La microstructure de ce copolymère B est déterminée par RMN 13C.

Le bloc SBR de ce copolymère B contient 25 % de styrène (en masse) et, pour sa partie butadiénique, 58 % de motifs vinyliques, 21 % de motifs 1,4 cis et 21 % de motifs 1,4 trans.

### III - PREPARATION DES COMPOSITIONS

Dans cet exemple, les deux élastomères SBR A et SBR B sont des SBR en solution. Ils sont utilisés pour la préparation de quatre compositions de caoutchouc A, A+G, B et B+G, en coupage avec un BR de microstructure majoritairement cis obtenue par catalyse au néodyme. Par rapport aux autres compositions, les compositions A+G et B+G comprennent également du glycérol. Un tableau 1 récapitulatif indique la composition exacte des compositions testées.

**Tableau 1:**

| | A | A+glycérol | B | B+glycérol |
|---|---|---|---|---|
| Elastomère SBR A solution (1) | 80,00 | 80,00 | | |
| Elastomère SBR B solution (2) | | | 80,00 | 80,00 |
| Elastomère BR solution (3) | 20,00 | 20,00 | 20,00 | 20,00 |
| Noir (4) | 2,00 | 2,00 | 2,00 | 2,00 |
| Silice (5) | 75,00 | 75,00 | 75,00 | 75,00 |
| Agent de couplage (6) | 6,08 | 6,08 | 6,08 | 6,08 |
| Glycérol 90% | | 3,00 | | 3,00 |
| Plastifiant (7) | 17,00 | 17,00 | 17,00 | 17,00 |
| Acide stéarique | 2,00 | 2,00 | 2,00 | 2,00 |
| ZnO (8) | 1,50 | 1,50 | 1,50 | 1,50 |
| Soufre | 1,20 | 1,20 | 1,20 | 1,20 |
| CBS (9) | 1,60 | 1,60 | 1,60 | 1,60 |
| Diphénylguanidine (10) | 1,30 | 1,30 | 1,30 | 1,30 |
| 6PPD (11) | 1,90 | 1,90 | 1,90 | 1,90 |
| Cire ozone C32 ST | 1,50 | 1,50 | 1,50 | 1,50 |

| | | | | |
|---|---|---|---|---|
| (1) L'élastomère A est un élastomère à base de styrène et de butadiène présentant un pourcentage de styrène de 25%, un pourcentage de vinyl 1,2 de 58% et fonctionnalisé en bout de chaîne par une fonction chimique de type silanol (2) L'élastomère B est un élastomère à base de styrène et de butadiène présentant un pourcentage de styrène de 25%, un pourcentage de vinyl 1,2 de 58% et fonctionnalisé en milieu de chaîne par une fonction chimique de type silylglycidyléther. (3) BR avec 4,3% de 1-2 ; 2,7% de trans ; 93% de cis 1-4 (Tg = - 106°C) ; (4) Noir de carbone : N234 (grade ASTM) ; (5) silice (« Zeosil 1165 MP » de la société Rhodia, type « HD ») - (BET et CTAB : environ 160 m²/g) ; (6) agent de couplage TESTP (« Si69 » de la société Degussa) ; (7) résine hydrocarbonée (« Escorez 2101 » de la société Exxon), (8) oxyde de zinc (grade industriel - société Umicore) ; (9) N-cyclohexyl-2-benzothiazyl-sulfénamide (Santocure CBS de la société Flexsys) ; (10) Diphénylguanidine (« Perkacit DPG » de la société Flexsys) ; (11) N-1,3-diméthylbutyl-N-phénylparaphénylènediamine (Santoflex 6-PPD de la société Flexsys) ; | | | | |

Chaque composition est réalisée par un travail thermomécanique en une étape qui dure 5 min, pour une vitesse moyenne des palettes de 50tr/min dans un mélangeur d'environ 3 litres jusqu'à atteindre une température maximale de tombée identique de 165°C tandis que l'étape d'incorporation du système vulcanisant est effectuée sur l'outil à cylindres à 50°C.

On introduit successivement, dans un mélangeur interne de laboratoire de type "Banbury', dont la capacité est de 3 litres, qui est rempli à 70% et dont la température initiale est d'environ 60°C, l'élastomère, la charge renforçante, l'agent de couplage, le plastifiant, la cire anti ozone, la DPG, l'antioxydant, l'acide stéarique, le glycérol et le monoxyde de zinc.
On conduit l'étape de travail thermo-mécanique pendant 4 à 5 minutes, jusqu'à une température maximale de tombée de 165°C environ.
Le premier temps précité de travail thermo-mécanique est ainsi réalisé, étant précisé que la vitesse moyenne des palettes lors de ce premier temps est de 50 t/min.
On récupère le mélange ainsi obtenu, on le refroidit puis, dans un mélangeur externe (homo-finisseur), on ajoute le soufre et la sulfénamide à 30°C, en mélangeant encore le tout pendant une durée de 3 à 4 minutes (second temps précité de travail mécanique).
Les compositions ainsi obtenues sont ensuite calandrées, soit sous forme de plaques (d'une épaisseur allant de 2 à 3 mm) ou fines feuilles de caoutchouc, pour la mesure de leurs propriétés physiques ou mécaniques, soit sous la forme de profilés directement utilisables, après découpage et/ou assemblage aux dimensions souhaitées, par exemple comme produits semi-finis pour pneumatiques, en particulier pour des bandes de roulement.
La réticulation est effectuée à 150°C pendant 40 min.

### IV - ESSAIS

Ces essais démontrent l'amélioration de la rigidité des compositions des bandes de roulement pour pneumatiques selon l'invention sans pénalisation de l'hystérèse, comparativement à une bande de roulement de l'essai témoin.

Les résultats concernant les propriétés des compositions sont consignés dans le tableau 2 ci-après.

**Tableau 2:**

| | **A** | **A+glycérol** | **B** | **B+glycérol** |
|---|---|---|---|---|
| **Propriétés à l'état non réticulé** | | | | |
| Plasticité ML1+4 100°C | 128,7 | 126,2 | 90,3 | 90,9 |
| Fluidite 100Kg | 66,0 | 83,0 | 304,0 | 308,0 |

| **Propriétés à l'état réticulé** | | | | |
|---|---|---|---|---|
| **Propriétés statiques** | | | | |
| Dureté Shore A | 67,20 | **71,90** | 68,20 | **73,80** |
| MA100(Mpa) 23°C | 2,27 | **3,19** | 2,44 | **3,51** |
| Elongation rupture (%) 23°C | 500,13 | 407,67 | 522,70 | 434,73 |
| Contrainte rupture (MPa) 23°C | 21,88 | 20,62 | 20,31 | 20,35 |

| **Propriétés dynamiques en déformation** | | | | |
|---|---|---|---|---|
| TG(D) MAX 40°C | 0,223 | **0,208** | 0,231 | **0,238** |
| G* 10% Retour (MPa) | 2,48 | **2,90** | 2,60 | **3,27** |

De façon surprenante, nous observons que les compositions A+glycérol et B+glycérol, objet de l'invention présentent une forte augmentation des modules statiques de rigidité, à savoir la dureté Shore et MA100, par rapport à la composition correspondante A ou B sans glycérol.

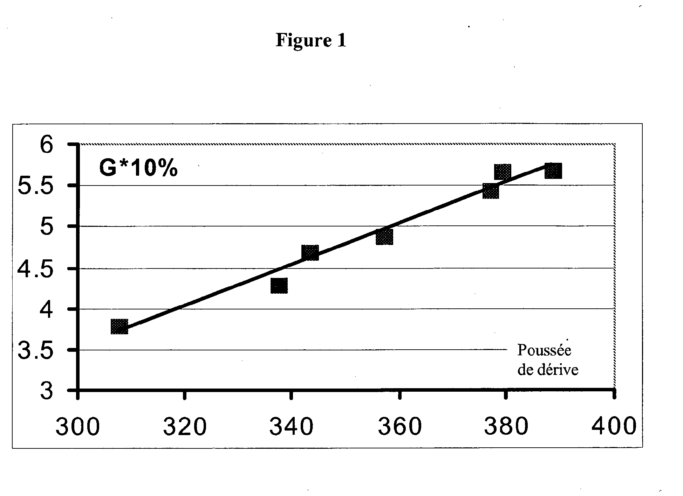

Le module de cisaillement aux faibles déformations noté G* 10% et la poussée de dérive sont corrélés comme le montre le graphe de la figure 1.

On constate sur ce graphe qu'une augmentation de la rigidité de la bande de roulement au travers du G*10% va impacter la poussée de dérive du pneu pour améliorer *in fine* le comportement routier.

En cohérence avec les mesures de rigidité statiques, nous observons que dans la composition A+glycérol, objet de l'invention, l'introduction de 3 pce de glycérol conduit à une rigidification de la matrice par un gain de 0.42 MPa en G* 10% tout en améliorant sensiblement les propriétés d'hystérèse puisqu'on observe une diminution de 0.015 de tan(δ). Pour la composition B+glycérol, l'augmentation des modules est encore plus importante avec un gain de 0.67MPa en G*10% sans pénalisation de l'hystérèse avec un tan(δ) quasi inchangé.

En conclusion, l'introduction de glycérol dans les compositions à base d'élastomère diénique fonctionnalisé permet d'augmenter de manière significative la rigidité à cuit des mélanges sans pénalisation de l'hystérèse. Ce qui permet d'avoir des compositions de caoutchouc présentant une l'hystérèse sensiblement réduite tout en améliorant la rigidité par rapport à une composition ne comprenant pas d'élastomère modifié. Ces propriétés laissent présager que des pneumatiques dont la bande de roulement est à base de telles compositions offriront une résistance au roulement réduite sans sensiblement dégrader les autres propriétés et notamment le comportement routier.

## Revendications

1. Composition de caoutchouc renforcée à base d'au moins:
- (a) un élastomère diénique modifié portant un segment polaire choisi parmi les élastomères diéniques fonctionnalisés en bout de chaîne, couplés ou étoilés par un groupement comportant une fonction polaire comprenant au moins un atome d'oxygène et les élastomères diéniques à blocs comprenant au moins un bloc polaire,
- (b) du glycérol et
- (c) une charge renforçante comprenant une charge inorganique.

2. Composition selon la revendication 1, **caractérisé en ce que** la fonction polaire comprenant au moins un atome d'oxygène est choisi dans le groupe constitué par le silanol, les alkoxysilanes, les alkoxysilanes portant un groupement amine, les époxydes, les éthers, les esters, l'hydroxyl, l'acide carboxylique.

3. Composition selon la revendication 2, **caractérisé en ce que** l'élastomère diénique modifié est choisi parmi les élastomères portant une fonction silanol, la fonction silanol étant située soit en bout de chaîne, soit en milieu de chaîne.

4. Composition selon la revendication 2, **caractérisé en ce que** l'élastomère diénique modifié est choisi parmi les élastomères fonctionnalisés en bout de chaîne, couplés ou étoilés issus de la fonctionnalisation des élastomères diéniques par un agent répondant à la formule générale :
(Y)m-R¹-Si(OR²)₃₋ₙ-R³n
dans laquelle :
Y représente les restes 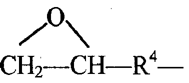 ou 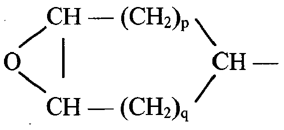
- R₁ représente un reste alkyle, cycloalkyle ou aryle ayant de 1 à 10 atomes de carbone,
- R² représente un reste alkyle, aryle, cycloalkyle, alkaryle, aralkyle, ayant de 1 à 12 atomes de carbone,
- R³ représente un reste alkyle, aryle, alkaryle ayant de 1 à 12 atomes de carbone,
- R⁴ représente un reste hydrocarboné ayant de 1 à 6 atomes de carbone et pouvant comprendre un ou plusieurs atomes d'oxygène dans la chaîne hydrocarbonée,
- n est un nombre entier choisi parmi les valeurs 0, 1,
- m est un nombre entier choisi parmi les valeurs 1 ou 2,
- p et q sont des nombres entiers choisis parmi les valeurs 0, 1, 2, 3 ou 4 étant entendu que la somme p + q doit représenter un nombre entier compris entre 2 et 5 inclusivement.

5. Composition selon la revendication 2, **caractérisé en ce que** l'élastomère diénique modifié est choisi parmi les élastomères fonctionnalisés en bout de chaîne ou couplés issus de la fonctionnalisation des élastomères diéniques par un agent de type alkoxysilane portant un groupement amine, cyclique ou non, tertiaire, secondaire ou primaire.

6. Composition selon la revendication 1, **caractérisé en ce que** l'élastomère diénique modifié est choisi parmi les élastomères à blocs comprenant au moins un bloc polyéther en bout de chaîne polymérique ou en milieu de chaîne et les élastomères à blocs comprenant au moins un bloc polaire central auquel sont liées plus de deux chaînes polymériques.

7. Composition selon l'une des revendications précédentes, **caractérisée en ce que** l'élastomère diénique modifié comporte également en l'extrémité de chaîne ou les extrémités de chaînes non liée(s) au segment polaire, une fonction amine.

8. Composition selon la revendication 7, **caractérisée en ce que** la fonction amine est dérivée de la pyrrolidine ou de l'hexaméthylèneimine.

9. Composition selon l'une des revendications précédentes, **caractérisée en ce que** l'élastomère diénique modifié est un copolymère de butadiène-styrène modifié.

10. Composition selon l'une des revendications précédentes, **caractérisée en ce que** le glycérol est présent dans des proportions 1 à 10 pce.

11. Composition selon l'une quelconque des revendications précédentes, **caractérisée en ce que** la charge renforçante comprend majoritairement une charge inorganique renforçante.

12. Composition selon l'une quelconque des revendications précédentes, **caractérisée en ce que** la charge inorganique renforçante est la silice.

13. Composition selon l'une quelconque des revendications précédentes, **caractérisée en ce que** la composition comprend également un élastomère diénique conventionnel.

14. Article semi-fini en caoutchouc pour pneumatique, **caractérisé en ce qu'**il comprend une composition de caoutchouc, réticulable ou réticulée, selon l'une quelconque des revendications 1 à 13.

15. Article semi-fini selon la revendication 14, **caractérisé en ce que** le dit article est une bande de roulement.

16. Procédé pour préparer une bande de roulement de pneumatique selon la revendication 15, **caractérisé en ce qu'**il comprend les étapes suivantes:
(i) la réalisation, à une température maximale comprise entre 130 °C et 200 °C, d'un premier temps de travail thermomécanique (parfois qualifié de phase "non productive ") des constituants de base nécessaires, à l'exception du système de réticulation, de la composition définie dans les revendications 1 à 13, comprenant l'élastomère diénique fonctionnalisé, le glycérol et une charge renforçante, à l'exception d'un système de réticulation, puis
(ii) la réalisation, à une température inférieure à ladite température maximale dudit premier temps, de préférence inférieure à 120 °C, d'un second temps de travail mécanique au cours duquel est incorporé ledit système de réticulation.
(iii) extruder ou calandrer la composition de caoutchouc ainsi obtenue, sous la forme d'une bande de roulement de pneumatique.

17. Pneumatique, **caractérisé en ce qu'**il comporte un article semi-fini selon la revendication 14 ou 15.

## Patentansprüche

1. Verstärkte Kautschukzusammensetzung auf Basis von mindestens:
- (a) einem modifizierten Dienelastomer mit einem polaren Segment, das aus durch eine Gruppe mit einer polaren Funktion mit mindestens einem Sauerstoffatom am Kettenende funktionalisierten, gekuppelten oder sternverzweigten Dienelastomeren und Dienblockelastomeren mit mindestens einem polaren Block ausgewählt ist,
- (b) Glycerin und
- (c) einem verstärkenden Füllstoff, der einen anorganischen Füllstoff umfasst.

2. Zusammensetzung nach Anspruch 1, **dadurch gekennzeichnet, dass** die polare Funktion mit mindestens einem Sauerstoffatom aus der Gruppe bestehend aus Silanol, Alkoxysilanen, Alkoxysilanen mit einer Amingruppe, Epoxiden, Ethern, Estern, Hydroxyl, Carbonsäure ausgewählt ist.

3. Zusammensetzung nach Anspruch 2, **dadurch gekennzeichnet, dass** das modifizierte Dienelastomer aus Elastomeren mit einer Silanolfunktion ausgewählt ist, wobei sich die Silanolfunktion am Ende der Kette oder in der Mitte der Kette befindet.

4. Zusammensetzung nach Anspruch 2, **dadurch gekennzeichnet, dass** das modifizierte Dienelastomer aus am Kettenende funktionalisierten, gekuppelten oder sternverzweigten Dienelastomeren ausgewählt ist, die sich aus der Funktionalisierung von Dienelastomeren mit einem Agens der allgemeinen Formel:
(Y)ₘ-R¹-Si(OR²)₃₋ₙR³ₙ
worin:
Y für die Reste 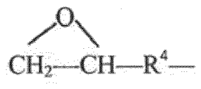 oder 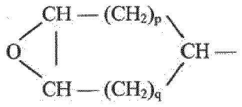 steht;
- R¹ für einen Alkyl-, Cycloalkyl- oder Arylrest mit 1 bis 10 Kohlenstoffatomen steht,
- R² für einen Alkyl-, Aryl-, Cycloalkyl-, Alkaryl- oder Aralkylrest mit 1 bis 12 Kohlenstoffatomen steht,
- R³ für einen Alkyl-, Aryl- oder Alkarylrest mit 1 bis 12 Kohlenstoffatomen steht,
- R⁴ für einen Kohlenwasserstoffrest mit 1 bis 6 Kohlenstoffatomen, der in der Kohlenwasserstoffkette ein oder mehrere Sauerstoffatome enthalten kann, steht,
- n für eine ganze Zahl steht, die aus den Werten 0, 1 ausgewählt ist,
- m für eine ganze Zahl steht, die aus den Werten 1 oder 2 ausgewählt ist,
- p und q für ganze Zahlen stehen, die aus den Werten 0, 1, 2, 3 oder 4 ausgewählt sind, mit der Maßgabe, dass die Summe p + q für eine ganze Zahl zwischen 2 und 5 inklusive stehen muss,
ergeben.

5. Zusammensetzung nach Anspruch 2, **dadurch gekennzeichnet, dass** das modifizierte Dienelastomer aus am Kettenende funktionalisierten oder gekuppelten Dienelastomeren ausgewählt ist, die sich aus der Funktionalisierung von Dienelastomeren mit einem Agens vom Alkoxysilan-Typ mit einer cyclischen oder acyclischen, tertiären, sekundären oder primären Amingruppe ergeben.

6. Zusammensetzung nach Anspruch 1, **dadurch gekennzeichnet, dass** das modifizierte Dienelastomer aus Blockelastomeren mit mindestens einem Polyetherblock am Ende der Polymerkette oder in der Mitte der Polymerkette und Blockelastomeren mit mindestens einem zentralen polaren Block, an den mehr als zwei Polymerketten gebunden sind, ausgewählt ist.

7. Zusammensetzung nach einem der vorhergehenden Ansprüche, **dadurch gekennzeichnet, dass** das modifizierte Dienelastomer außerdem an dem Kettenende bzw. den Kettenenden, das bzw. die nicht an das polare Segment gebunden ist bzw. sind, eine Aminfunktion umfasst.

8. Zusammensetzung nach Anspruch 7, **dadurch gekennzeichnet, dass** sich die Aminfunktion von Pyrrolidin oder Hexamethylenimin ableitet.

9. Zusammensetzung nach einem der vorhergehenden Ansprüche, **dadurch gekennzeichnet, dass** es sich bei dem modifizierten Dienelastomer um ein modifiziertes Butadien-Styrol-Copolymer handelt.

10. Zusammensetzung nach einem der vorhergehenden Ansprüche, **dadurch gekennzeichnet, dass** das Glycerin in Anteilen von 1 bis 10 phe vorliegt.

11. Zusammensetzung nach einem der vorhergehenden Ansprüche, **dadurch gekennzeichnet, dass** der verstärkende Füllstoff hauptsächlich einen verstärkenden anorganischen Füllstoff umfasst.

12. Zusammensetzung nach einem der vorhergehenden Ansprüche, **dadurch gekennzeichnet, dass** es sich bei dem verstärkenden anorganischen Füllstoff um Kieselsäure handelt.

13. Zusammensetzung nach einem der vorhergehenden Ansprüche, **dadurch gekennzeichnet, dass** die Zusammensetzung außerdem ein konventionelles Dienelastomer umfasst.

14. Kautschuk-Halbzeug für einen Reifen, **dadurch gekennzeichnet, dass** es eine vernetzbare oder vernetzte Kautschukzusammensetzung nach einem der Ansprüche 1 bis 13 umfasst.

15. Halbzeug nach Anspruch 14, **dadurch gekennzeichnet, dass** es sich bei dem Halbzeug um eine Lauffläche handelt.

16. Verfahren zur Herstellung einer Reifenlauffläche nach Anspruch 15, **dadurch gekennzeichnet, dass** es folgende Schritte umfasst:
(i) Durchführen eines ersten Schritts der thermomechanischen Bearbeitung (manchmal als "nichtproduktive" Phase bezeichnet) der erforderlichen Grundbestandteile, mit Ausnahme des Vernetzungssystems, der in den Ansprüchen 1 bis 13 definierten Zusammensetzung, umfassend das funktionalisierte Dienelastomer, das Glycerin und einen verstärkenden Füllstoff, mit Ausnahme eines Vernetzungssystems, bei einer Maximaltemperatur zwischen 130°C und 200°C, dann
(ii) Durchführen einer zweiten mechanischen Bearbeitung bei einer unter der Maximaltemperatur des ersten Schritts, vorzugsweise unter 120°C, liegenden Temperatur, in deren Verlauf das Vernetzungssystem eingearbeitet wird, und
(iii) Extrudieren oder Kalandrieren der so erhaltenen Kautschukzusammensetzung in Form einer Reifenlauffläche.

17. Reifen, **dadurch gekennzeichnet, dass** er ein Halbzeug nach Anspruch 14 oder 15 umfasst.

## Claims

1. Reinforced rubber composition based on at least:
- (a) one modified diene elastomer bearing a polar segment chosen from diene elastomers that are chain-end functionalized, coupled or star-branched by a group containing a polar function comprising at least one oxygen atom and diene block elastomers comprising at least one polar block,
- (b) glycerol, and
- (c) one reinforcing filler comprising an inorganic filler.

2. Composition according to Claim 1, **characterized in that** the polar function comprising at least one oxygen atom is chosen from the group formed by silanol, alkoxysilanes, alkoxysilanes bearing an amine group, epoxides, ethers, esters, hydroxyl, carboxylic acid.

3. Composition according to Claim 2, **characterized in that** the modified diene elastomer is chosen from elastomers bearing a silanol function, the silanol function being located either at the end of the chain, or in the middle of the chain.

4. Composition according to Claim 2, **characterized in that** the modified diene elastomer is chosen from chain-end functionalized, coupled or star-branched elastomers resulting from the functionalization of diene elastomers by an agent corresponding to the general formula:
(Y)ₘ-R¹-Si(OR²)₃₋ₙ-R³ₙ
in which:
Y represents the 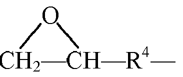 or 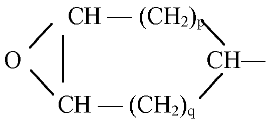 residues
- R¹ represents an alkyl, cycloalkyl or aryl residue having from 1 to 10 carbon atoms,
- R² represents an alkyl, aryl, cycloalkyl, alkaryl or aralkyl residue having from 1 to 12 carbon atoms,
- R³ represents an alkyl, aryl or alkaryl residue having from 1 to 12 carbon atoms,
- R⁴ represents a hydrocarbon-based residue having from 1 to 6 carbon atoms and which may comprise one or more oxygen atoms in the hydrocarbon-based chain,
- n is an integer chosen from the values 0 or 1,
- m is an integer chosen from the values 1 or 2,
- p and q are integers chosen from the values 0, 1, 2, 3 or 4, it being understood that the sum p + q should represent an integer between 2 and 5 inclusive.

5. Composition according to Claim 2, **characterized in that** the modified diene elastomer is chosen from chain-end functionalized or coupled resulting from the functionalization of diene elastomers by an agent of alkoxysilane type bearing a cyclic or noncyclic and tertiary, secondary or primary amine group.

6. Composition according to Claim 1, **characterized in that** the modified diene elastomer is chosen from block elastomers comprising at least one polyether block at the end of the polymer chain or in the middle of the chain and block elastomers comprising at least one central polar block to which more than two polymer chains are bonded.

7. Composition according to one of the preceding claims, **characterized in that** the modified diene elastomer also has, at the chain end or chain ends not bonded to the polar segment, an amine function.

8. Composition according to Claim 7, **characterized in that** the amine function is derived from pyrrolidine or from hexamethyleneimine.

9. Composition according to one of the preceding claims, **characterized in that** the modified diene elastomer is a modified butadiene-styrene copolymer.

10. Composition according to one of the preceding claims, **characterized in that** the glycerol is present in proportions of 1 to 10 phr.

11. Composition according to any one of the preceding claims, **characterized in that** the reinforcing filler predominantly comprises a reinforcing inorganic filler.

12. Composition according to any one of the preceding claims, **characterized in that** the reinforcing inorganic filler is silica.

13. Composition according to any one of the preceding claims, **characterized in that** the composition also comprises a conventional diene elastomer.

14. Tyre semi-finished rubber article, **characterized in that** it comprises a crosslinkable or crosslinked rubber composition according to any one of Claims 1 to 13.

15. Semi-finished article according to Claim 14, **characterized in that** said article is a tread.

16. Process for preparing a tyre tread according to Claim 15, **characterized in that** it comprises the following stages:
(i) carrying out, at a maximum temperature of between 130°C and 200°C, a first step of thermomechanical working (sometimes described as "non-productive" phase) of the necessary base constituents of the composition, with the exception of the crosslinking system, defined in Claims 1 to 13, comprising the functionalized diene elastomer, the glycerol and a reinforcing filler, with the exception of a crosslinking system, then
(ii) carrying out, at a temperature lower than said maximum temperature of said first step, preferably of less than 120°C, a second step of mechanical working during which said crosslinking system is incorporated, and
(iii) extruding or calendering the rubber composition thus obtained, in the form of a tyre tread.

17. Tyre, **characterized in that** it comprises a semi-finished article according to Claim 14 or 15.
